# EUROPEAN PATENT SPECIFICATION

(11) **EP 2 401 639 B1**
(45) Date of publication and mention of the grant of the patent: **18.09.2019**
(21) Application number: 09779090.1
(22) Date of filing: 24.02.2009
(51) Int. Cl.: G02B 6/00

(54) **LAMINATED GLASS DIFFUSED LIGHTING PANEL AND METHOD OF MANUFACTURING IT**
VERBUNDGLASSTREULICHTPLATTE UND IHRES HERSTELLUNGSVERFAHREN
PANNEAU D'ÉCLAIRAGE DIFFUS EN VERRE STRATIFIÉ ET SON PROCÉDÉ DE FABRICATION

(43) Date of publication of application: 04.01.2012
(73) Proprietor: AGC Glass Europe, 1348 Louvain-la-Neuve (BE)
(72) Inventor: AYOUB, Patrick, B-6040 Jumet (BE)
(74) Representative: Bayot, Daisy
(86) International application number: PCT/EP2009/052156
(87) International publication number: WO 2010/097110

(56) References cited:
- EP-A- 0 457 009
- EP-A- 1 369 711
- EP-A1- 1 840 449
- WO-A-03/057478
- WO-A1-2004/009349
- WO-A1-2005/045488
- WO-A1-2007/057459
- WO-A1-2009/001264
- JP-A- 2007 273 090

## Description

### Field of the invention

This invention relates to laminated glass lighting panels, and to methods of manufacturing the same.

### Description of the Related Art:

Laminated glass can be used as a type of safety glass that holds together when shattered. In the event of breaking, it is held in place by the plastics interlayer, typically of Polyvinylbutyral (PVB), between its two or more layers of glass substrate. The plastics interlayer keeps the layers of glass substrate bonded even when broken, and its high strength prevents the glass substrates from breaking-up into large sharp pieces.

Methods for manufacturing laminated glass are well-known in the window industry. A so-called sandwich of the first glass substrate, the plastics interlayer and the second glass substrate is laminated in an automated laminating line by using procedures such as calendering and autoclaving. Calendering of the glass/plastic laminate means the pre-gluing of the sandwich under the action of a pressure imposed by rolls applied on either side of the glass substrates, optionally with action of heat. The final gluing of the glass substrates by a vacuum/heating cycle, which combines pressure and temperatures, takes place during the step of autoclaving, which completely removes air between the plastics interlayer and the glass substrates. The result is a clear glass laminate well known from car windscreens.

Laminated glass panels with integrated light sources such as light emitting diodes (LEDs), are known, e. g. for displaying information or for lighting purposes. For these application areas, the manufacturing of a laminated glass panel with electronic components typically comprises the steps of depositing a conductive layer on the first glass substrate, realization of electronic circuits in the conductive layer and depositing of electronic components on the conductive layer, connected to the electronic circuits. The plastics interlayer is then deposited on the conductive layer. The sandwich is obtained by the application of the second glass substrate on the plastics interlayer, which is then laminated as outlined before. In each of these applications it is necessary to furnish an electric supply to the conducting layer for supplying electrical power to the LEDs. EP 1 840 449 describes such a panel of laminated glass embedding LEDs. The LEDs are arranged in a regular grid at 5cm intervals such that the array of diodes covers substantially the entire area of glazing panel. Each LED has a surface area of about 4mm². First and second bus bars extend substantially along the entire length of one edge of the panel, laminated between the two glass sheets.

WO2005/045488 discloses a laminated glass lighting panel comprising two glass substrates laminated together via a plastic interlayer which has a part which is light diffusive and a part which is transparent, and wherein the two parts are physically separated by a diffusive barrier.

### Summary of the Invention:

An object of the invention is to provide laminated glass lighting panels, and methods of manufacturing the same.

According to a first aspect, the invention provides a laminated glass lighting panel as claimed in claim 1.

By having the light deflected by the plastic interlayer, it can be spread or diffused more widely to reduce problems caused by more direct illumination from point sources.

Embodiments of the invention can have any other features added, some such additional features are set out in dependent claims and described in more detail below.

Another aspect provides a method of manufacturing a laminated glass lighting panel as claimed in claim 8.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Figures 1 and 2 show views of a first embodiment,
Figure 3 shows a cross section view of a further embodiment having particles for diffusing the light,
Figure 4 shows a cross section of an example of a barrier for separating the parts of the plastic interlayer,
Figure 5 shows a cross section view of a further embodiment where the barrier is reflective,
Figure 6 shows a top view of an arrangement of different parts of the plastic interlayer,
Figure 7 shows a cross section view of a further embodiment before the parts are pushed together during manufacture,
Figure 8 shows a cross section view of an embodiment having a frame for mounting the light sources on the edge of the glass substrates, and
Figure 9 shows a top view of an embodiment having an arrangement of side emitting light sources mounted on an interior surface of one of the glass substrates.

### Description of the Preferred Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

### Introduction to some embodiments

Some of the features described below arise from an appreciation that light generated on the surface of such a panel is not perfectly uniform and that point source LEDs in known panels can create glare issues. Thus an objective of at least some of the embodiments is to provide a panel of laminated glass including at least one light source which provides surface lighting with an improved uniformity. Another objective of some embodiments is to provide such a surface lighting panel in which glare effects are reduced. Another objective of at least some embodiments is to provide such a surface lighting panel which provides a more uniformly diffused surface lighting. Some embodiments can provide a laminated assembly that is light diffusive for edge lighting on parts of a main surface and that is transparent on the rest of the main surface.

Disclosed is a glass panel, comprising a first glass substrate and a second glass substrate, laminated together via a plastic interlayer. The lamination can be of any type, not only the examples described. The glass substrates can encompass glass equivalents such as hard plastic or Perspex acrylic or polycarbonate materials. The panel has at least one light source arranged to emit light into the panel along a plane of the panel, and preferably to emit light into the plastic interlayer predominantly along a plane of the panel (but light can also be emitted into one of the glass substrates along a plane of the panel). The plastic interlayer is arranged to be at least partially light diffusive such that light emitted by the at least one light source is deflected out of the plane of the panel and through the surface of at least one of the glass panels. This can be made partially diffusive by choice of properties of the material, by adding particles, by adding any kind of reflective or partially reflective structures, or by surface treatments to hinder total internal reflection and so on. The panel need not be flat, it can be formed to have a curved main surface.

### Additional features:

Some additional features of some of the embodiments are as follows. The plastic interlayer can comprise Polyvinylbutyral (PVB). The interlayer can in some cases have at least a first type of PVB (PVB1) and at least a second type of PVB (PVB2), the first type of PVB being at least partially light diffusing or is light diffusing.

A barrier for physical separation is arranged between PVB1 and PVB2. This can help prevent PVB mixing during a lamination process. The barrier for physical separation can be a separation rod which is light reflecting. This is arranged to help to deflect light emitted by the at least one light source toward the surface of at least one of the glass substrates. In some cases at least one light source such as an LED, OLED etc. can be positioned at the periphery of the glass panel in order to emit light at the edge of the panel in a direction included in the plane of the glass substrates.

In general, the plastics interlayer can be provided as a plastic foil or a plastic sheet. According to a preferred embodiment of the invention, the plastics interlayer is provided as Polyvinylbutyral (PVB). Typically, the plastics interlayer is not transparent when applied, but becomes transparent after laminating, i.e. after calendering and autoclaving. Further, a thermoplastic material such as Polyurethane can be used as a plastics interlayer.

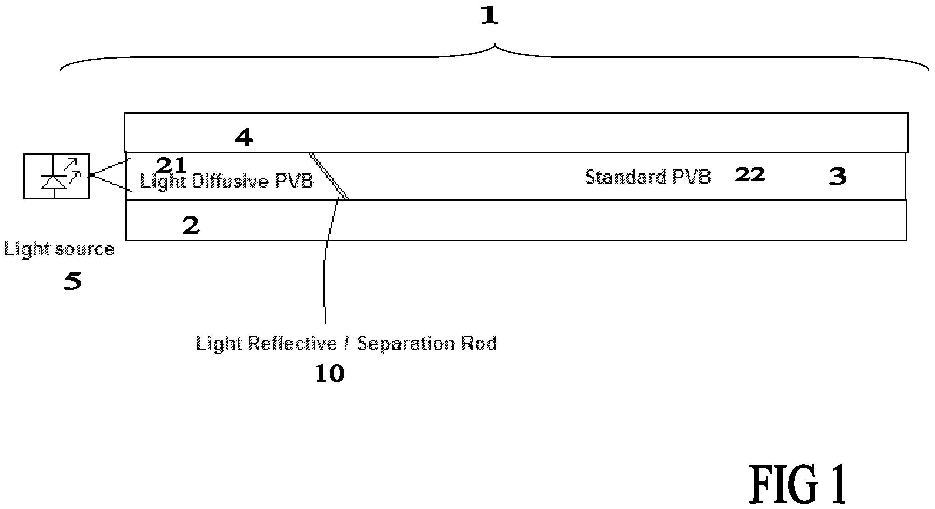

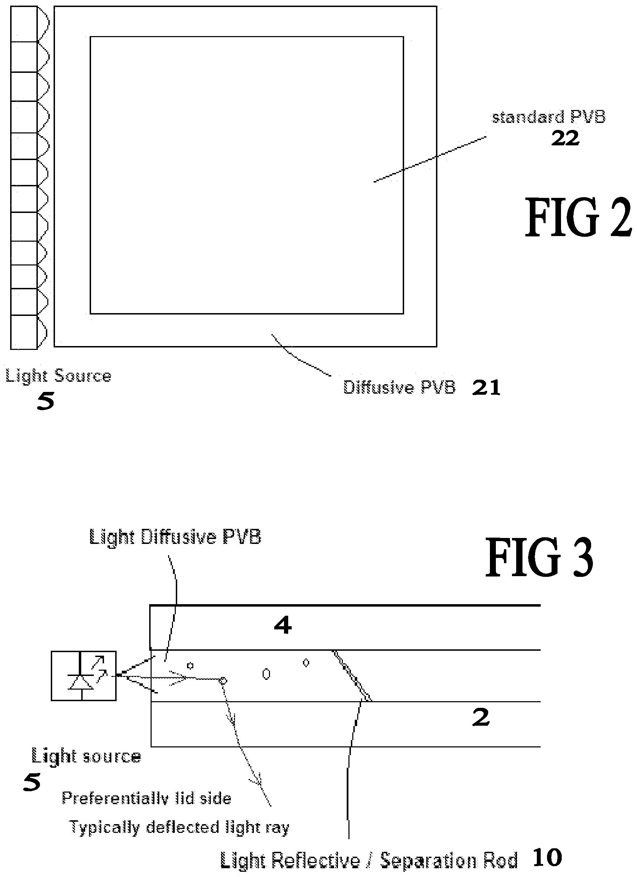

### Figures 1 and 2 - a first embodiment

Figure 1 shows a cross section view and figure 2 shows a top view of a particular embodiment according to which the light sources are LEDs that are positioned at the periphery of the glass panel in order to emit light in a direction along the plane of the glass substrates.

Clearly in other embodiments at least one light source of any kind (LED, OLED, laser diodes, fluorescent tube, fluorescent lamp, for example...) can be positioned anywhere or everywhere in the panel (for example a regular matrix of side emitting light sources covering all the surface of the panel can be embedded in the panel, or a line of side emitting light sources can be embedded in the panel, ...). The light source(s) can be embedded in the panel or positioned at the edge of the panel.

An example is provided regarding an assembly that is represented in Figure 1 and Figure 2. As can be seen from Fig. 1, according to a preferred embodiment of the invention, the panel of laminated glass 1 comprises a first glass plate or substrate 2, a plastic interlayer 3 and a second glass plate or substrate 4, wherein the plastic interlayer 3 is provided between the first glass substrate 2 and the second glass substrate 4. The plastic interlayer 3 may be provided as a peripheral portion (arranged at the periphery of the glass panel) made of a first type 21 of plastic such as PVB for example the partially diffusive or translucent PVB sold by Solutia with the reference "Arctic Snow" and an central portion made of a second type 22 of plastic such as PVB for example the PVB sold by Solutia with the reference RF41. A reflective barrier 10 separates the two types.

The glass can be coated, tinted, tempered or bended or a combination of these. In this example 30cm^{∗}30cm sheets with a thickness of 2.1mm can be considered, though other dimensions can be used according to the application. The light source 5 can be for example a Cold Cathode Fluorescent Lamp (CCFL), a fluorescent tube or several LED's (Top or side LEDs), OLED's side by side or fibreoptic guides, mirrors or light guides that guide the light to the side.

Basic methods for manufacturing laminated glass, without the novel features of the present invention, for use in this and other embodiments are well-known in the window industry and so need not be described in detail. A so-called sandwich of the first glass substrate, the plastics interlayer and the second glass substrate is laminated in an automated laminating line by using the procedure of calendaring and autoclaving. Calendaring involves the pre-gluing of the sandwich under the action of a pressure imposed by two rolls applied on either side of the glass substrates, optionally with action of heat. The final gluing of the glass substrates by a vacuum/heating cycle, which combines pressure and temperatures, takes place during the step of autoclaving, which completely removes air between the plastics interlayer and the glass substrates. The result is a clear glass laminate.

The manufacturing of the laminated glass panel can incorporate electric or electronic components. Examples of such components are lamps, transistors, diodes, switches, microphones, actuators, amplifiers, interfaces, microprocessors, antennae, and passive devices such as resistors, inductors, capacitors. In this case typically there are steps of depositing a conductive layer on the first layer of glass substrate, realization of electric or electronic circuits in the conductive layer and depositing of electric or electronic components on the conductive layer, e.g. connected in electric or electronic circuits. The plastics interlayer is then deposited on the conductive layer. The sandwich is obtained by the application of the second layer of glass on the plastics interlayer, which is then laminated as outlined before.

Figure 2 shows a top view, showing a strip of light sources down one edge of the square laminated glass. Also, the arrangement of the diffusive part 21 around all four edges of the square is shown.

### Figure 3, embodiment having particles

Figure 3 shows a cross section view of a further embodiment having particles for diffusing the light. The items and reference numbers in this figure refer to the same items in previous drawings. Any kind of at least partially light diffusive plastic interlayer can be used such as:
- a clear plastic layer such as PVB including diffusive particles (fine particles such as a tin oxide e.g. indium tin oxide or other inorganic oxides incorporated during the fabrication process of the PVB);
- Alternatives to this can include organic diffusing particles. Examples are the commercial references ITO PVB 0.2, Arctic Snow and Polar White from Solutia.

In this and other embodiments, the glass panel can have embedded a regular matrix of lights or lamps such as LEDs around the edges or elsewhere, and the plastic interlayer can be made of a unique light diffusing PVB.

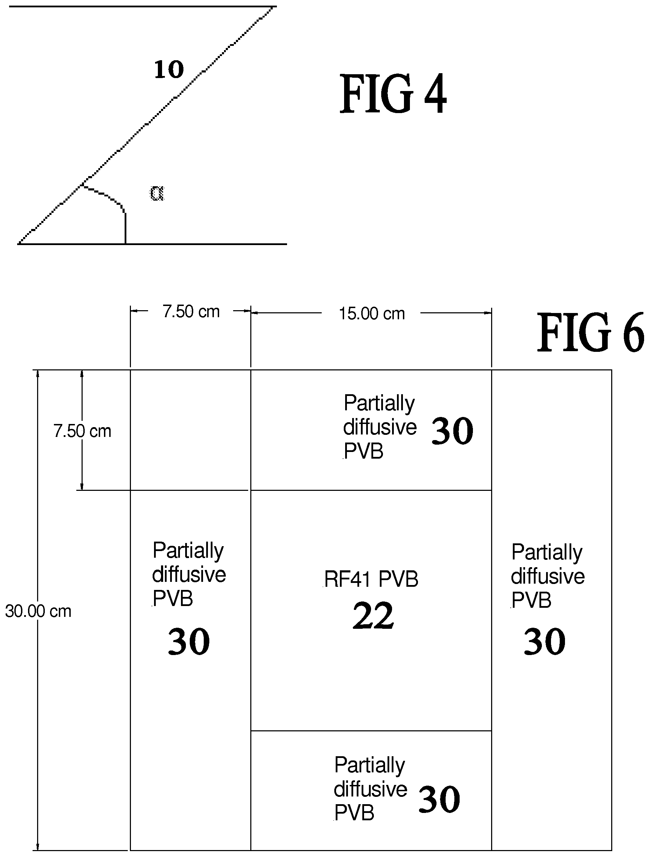

### Figure 4, embodiment having a barrier

Figure 4 illustrates the use of a separator or barrier such as a metallic rod or tube 10, e.g. at an angle to the plane of the glass laminate in order to:
- assure a physical separation between PVB1 and PVB2 and in order to prevent PVB mixing during the lamination process, and
- to help to deflect light emitted by the at least one light source toward the surface of at least one of the glass panels.

According to this and other embodiments of the present invention other types of material for the rod or tube can be used such as light reflecting polymers, mirrors or coated glasses or polymers. Optionally, any material that is light reflecting and that can withstand the lamination process can be used.

Metallic tubes, rods or sticks are useful because of their ability to deform while still having a good light reflection. The stick can be higher (for example 1.5 to 3mm) than the used layers of PVB (typically 2 layers = 1.52mm). The rod cross section can be Z shaped with an angle α (ranging from 10 to 90°) or simply I shaped.

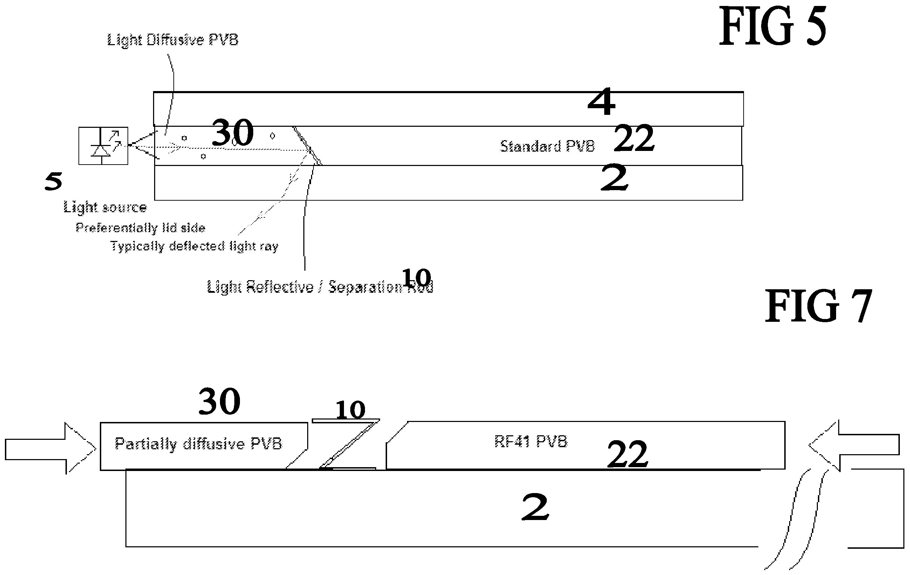

### Figure 5, further embodiment with reflective barrier

Figure 5 shows a cross section view with the reflective barrier 10. The items and reference numbers in this figure refer to the same items in previous drawings. The partially diffuse plastic intermediate layer has the reference number 30. For example, partially diffusive PVB 30 can be arranged around the edges with a width of 7.5cm. The reflective surface of the separator or barrier 10 is angled to deflect or reflect the light out of the plane of the panel. Additionally, in this embodiment or in other embodiments, in order to enhance light output on one side, one can add a reflective coating on the glass on the other side in order to reflect the light back through the plastic interlayer.

### Figure 6 arrangement of different parts of the plastic interlayer

Figure 6 shows a top view of an arrangement of different parts of the plastic interlayer. This shows a square panel, 30cm by 30cm. A central square of 15 cm by 15cm is formed of standard plastic intermediate layer such as RF41PVB 22 to be transparent. A partially diffusive plastic intermediate layer such as PVB 30 is arranged around the edges with a width of 7.5cm. Other dimensions and arrangements can be conceived to suit particular applications.

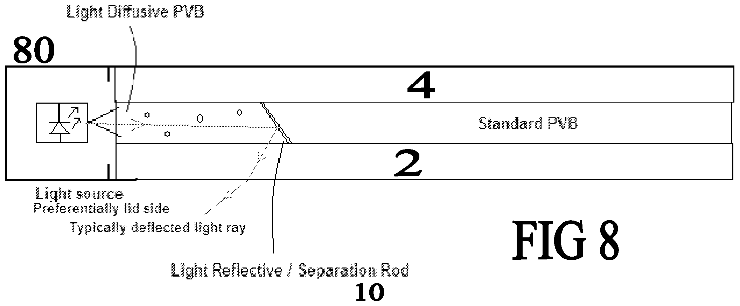

### Manufacturing steps, figs 7 and 8

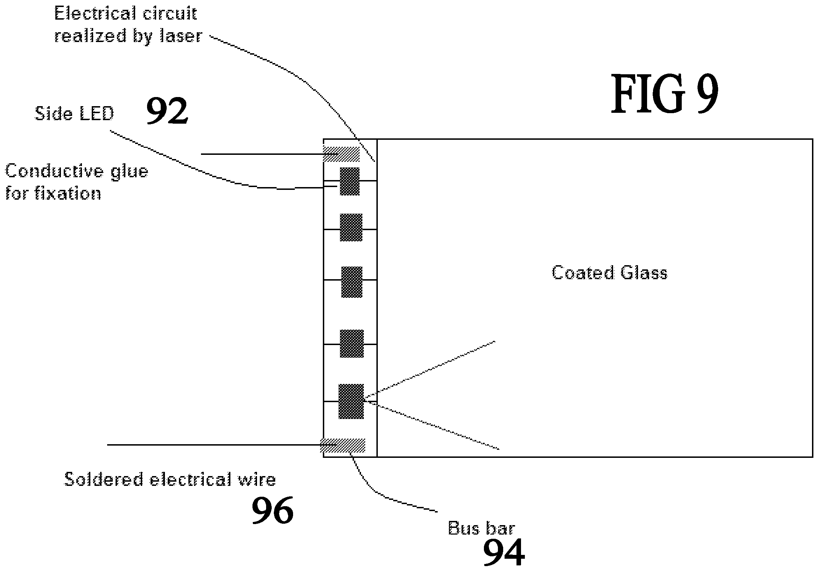

A first embodiment of a method of manufacturing has the light sources as an exterior element added to the glass structure after lamination. A second embodiment described below with reference to figure 9 has light sources such as LEDs embedded with the glass before lamination. Steps according to a first embodiment with edge lighting as an exterior element can be as follows:
1 - Cut two sheets of standard plastic intermediate layer such as RF41 PVB in order to have two pieces that have the desired dimensions, for example 15cm^{∗}15cm and total thickness of 1.56mm. Trim the edges in order to fit best the angle of the separator or barrier, e.g. the rod 10.
2 - Superpose these pieces of plastic intermediate layer such as PVB in the center first glass.
3 - Place the reflective separators or barriers, e.g. rods at the edges of the plastic intermediate layer such as RF41 PVB.
4 - Fill in the surface with 2 layers (or more layers, e.g. 4 layers, total = 1.56mm) of 7.5cm wide bands of the partially diffusive plastic intermediate layer such as partially diffusive PVB with the edges trimmed to fit best the angle of the separator or barrier, e.g. rod 10.
5 - Press the two plastic intermediate layers such as PVBs onto either side of the separator or barrier, e.g. rod 10 as shown in cross section in Figure 7 in order to have a good interface with the separator or barrier, e.g. the rod 10.
6 - Add the other glass plate above the structure.
7 - Use a normal laminating cycle.
8 - The lighting element can be fixed to the laminated glass structure using a frame such as for example a metallic profile. The fixing can be made by a press fit over the edges of the laminated glass, or with the use of a glue for example. Figure 8 shows a cross section view of an embodiment having such a frame 80 for mounting the light sources on the edge of the glass substrates. The light source can be a top emitting LED for example, located to be in the plane of the plastic interlayer and arranged to emit light into the plastic interlayer.

### Manufacturing steps, second embodiment, fig 9

Figure 9 shows a top view of an embodiment having an arrangement of side emitting light sources 92 mounted on an interior surface of one of the glass substrates. An array of such devices coupled in parallel is shown along one edge of the glass. Electrical supply is provided from electrical wires, e.g. soldered electrical wires 96 that are electrically connected, e.g. soldered to a bus bar 94 at each end of the array.

A method of manufacturing according to a second embodiment using such side emitting light sources, e.g. LEDs will now be described.
1. Form a conductive coating on a first glass substrate. This coated glass should allow electric conduction with a resistance of preferably below 20ohm/square.
2. Pattern the conductive coating to form a required circuit having connections including large areas for use as bus bars which can be receive a joint such as a solder joint, for example using a laser.
3. Fix side emitting light devices such as side emitting LEDs using a suitable means, e.g. conductive glue on the circuit that has been patterned.
4. Add electrical contacts by wires connected to the bus bars, e.g. soldering wires onto bus bars. The following steps are similar to steps 1 to 7 of the first method:
5 Cut two sheets of standard plastic intermediate layer such as RF41 PVB in order to have two pieces that are the desired dimensions, for example 15cm^{∗}15cm and total thickness of 1.56mm. Trim the edges in order to fit best the angle of the separator or barrier, e.g. the rod 10.
6 Superpose these pieces of standard plastic intermediate layers such as PVB in the center of the first glass which may be the coated glass.
7 Place the reflective separators or barriers, e.g. rods at the edges of the standard plastic intermediate layer such as RF41 PVB.
8 Fill in the surface with 2 layers (or more layers, e.g. 4 layers, total = 1.56mm) of 7.5cm wide bands of the partially diffusive plastic intermediate layer such as partially diffusive PVB with the edges trimmed to fit best the angle of the separator or barrier, e.g. the rod 10.
9 Press the two plastic intermediate layers such as two PVB layers onto either side of the separator or barrier, e.g. rod 10, as shown in cross section in Figure 7 in order to have a good interface with the separator or barrier, e.g. the rod 10.
10 Add the other glass plate above the structure.
11 Finally, use a normal laminating cycle to laminate the glass substrates.

### Other embodiments

In some cases the glass sheets can be flat soda lime glass, notably float glass. One or both of the glass sheets may be clear glass, extra clear glass or body tinted glass. Particularly when intended for use in window applications, the glazing panel may be substantially transparent. In this case, it may have a light transmission (CIE Illuminant C) of greater than or equal to 40%, 50%, 60% or 70% and/or a level of haze of less than or equally to 5%, 3% or 2% for example. Particularly when intended for decoration and/or lighting purposes, it may be unnecessary and/or undesired for the panel to be substantially transparent. In this case, it may have a light transmission (CIE Illuminant C) of less than or equal to 20%, 10%, or 5% and/or a level of haze of greater than or equally to 30%, 40% or 50%.

A substantially transparent electrically conductive coating layer may be applied on the glass near the edges for providing power to the LEDs. First and second glass sheets may be laminated together to form a laminated assembly by a plastics interlayer which comprises one or more sheets of PVB or a resin, for example EVA. The plastics interlayer may be substantially transparent; it may be neutral or clear in colour or it may be body tinted. In some cases, the majority or substantially the entire surface area of the panel can be provided with LEDs, that is to say that the LEDs form an array of spaced LEDs with the array covering greater than 50%, 60%, 70%, 80% or 90% of the surface area of the panel.

Examples of additives to make the interlayer diffusive can encompass inorganic particles of glass, silica, mica, synthetic mica, calcium carbonate, barium sulfate, talc, montmorillonite, kaolin clay, bentonite, hectorite, etc., metal oxide particles of titanium oxide, zinc oxide, tin oxide, alumina, etc., or organic polymer particles of acrylic beads, styrene beads, benzoguanamine, silicone, etc. A haze value when the diffusing material is added is preferably not lower than 10% but not greater than 99%. If it is lower than 10%, a sufficient light scattering effect may not be obtained, and if it is greater than 99%, the light transmission characteristics degrade, greatly reducing the amount of emergent light.

More diffusion can be obtained by surface roughening of a light-emitting face accomplished by cutting using a saw or an automatic cutter (for example, an NC router) or by blasting, surface grinding using a grinder, emboss forming, etc. In the case of blasting, particles are applied using a high-speed blasting machine over the surface of the interlayer or the glass substrate to form random projections and depressions, and the thus formed surface can be used as the light-emitting face. In the case of grinding, a grinder using, for example, a file is used to grind the surface.

The light sources can be coloured, and optionally arranged so that there is colour mixing to achieve a uniform white. The relative levels of the colours can be controlled to control the colour temperature if desired. The panels can be incorporated into buildings, windows, mirrors, backlights for display systems and so on. Arrays of the panels can be built up to illuminate larger areas.

Other variations can be envisaged within the scope of the claims.

## Claims

1. A laminated glass lighting panel, comprising
a first glass substrate (2) and a second glass substrate (4), the first and the second glass substrates being laminated together via a plastic interlayer (3, 21, 22, 30),
at least one light source (5, 92) being arranged to emit light into the panel along a plane of the panel,
wherein at least part of the plastic interlayer is arranged to deflect the light out of the plane of the panel and through at least one of the glass substrates to provide a diffused light output and wherein the plastic interlayer comprising polyvinylbutyral, wherein the plastic interlayer has a first part (21, 30) which is at least partially light diffusive and a second part (22) which is transparent and wherein the lighting panel has a reflective barrier (10) for physical separation between the first and second part of the plastic interlayer.

2. The lighting panel of claim 1, wherein the at least one light source (5, 92) is arranged to emit light into the plastic interlayer predominantly along a plane of the panel.

3. The lighting panel of claim 1, the plastic interlayer being at least partially light diffusive to cause the light to be deflected.

4. The lighting panel of claim 1, the barrier comprising a separation rod.

5. The lighting panel of claim 4, the separation rod having a surface angled to deflect the light emitted by the at least one light source out of the plane of the panel and through at least one of the glass substrates.

6. The lighting panel of any preceding claim, the at least one light source comprising a light source mounted on a frame (80) at an edge of one or both of the glass substrates so as to face the plastic interlayer.

7. The lighting panel of any preceding claim, the at least one light source comprising a side emitting source (92) mounted on an interior surface of one of the glass substrates.

8. A method of manufacturing a laminated glass lighting panel, having the steps of laminating a first glass substrate and a second glass substrate, with a plastic interlayer in between,
and forming at least one light source to emit light into the panel along a plane of the panel, wherein at least part of the plastic interlayer is arranged to deflect the light out of the plane of the panel and through at least one of the glass substrates to provide a diffused light output, wherein the plastic interlayer has a first part (21, 30) which is at least partially light diffusive and a second part (22) which is transparent and wherein the lighting panel has a reflective barrier (10) for physical separation between the first and second part of the plastic interlayer.

9. The method of claim 8, the plastic interlayer being at least partially light diffusive to cause the light to be deflected.

10. The step of forming the at least one light source involving providing a side emitting light source on an interior surface of one of the glass substrates before the lamination step.

## Patentansprüche

1. Verbundglasbeleuchtungsplatte, umfassend
ein erstes Glassubstrat (2) und ein zweites Glassubstrat (4), wobei das erste und das zweite Glassubstrat über eine Kunststoffzwischenschicht (3, 21, 22, 30) miteinander laminiert sind,
mindestens eine Lichtquelle (5, 92), die dazu angeordnet ist, Licht in die Platte entlang einer Ebene der Platte zu emittieren,
wobei mindestens ein Teil der Kunststoffzwischenschicht zum Ablenken des Lichts aus der Ebene der Platte und durch mindestens eines der Glassubstrate angeordnet ist, um eine gestreute Lichtausgabe bereitzustellen, und wobei die Kunststoffzwischenschicht Polyvinylbutyral umfasst, wobei die Kunststoffzwischenschicht einen ersten Teil (21, 30), der mindestens teilweise lichtstreuend ist, und einen zweiten Teil (22), der transparent ist, aufweist und wobei die Beleuchtungsplatte eine Reflexionssperre (10) zur physischen Trennung zwischen dem ersten und zweiten Teil der Kunststoffzwischenschicht aufweist.

2. Beleuchtungsplatte nach Anspruch 1, wobei die mindestens eine Lichtquelle (5, 92) dazu angeordnet ist, Licht in die Kunststoffzwischenschicht überwiegend entlang einer Ebene der Platte zu emittieren.

3. Beleuchtungsplatte nach Anspruch 1, wobei die Kunststoffzwischenschicht zumindest teilweise lichtstreuend ist, um eine Ablenkung des Lichts zu bewirken.

4. Beleuchtungsplatte nach Anspruch 1, wobei die Sperre einen Trennstab umfasst.

5. Beleuchtungsplatte nach Anspruch 4, wobei der Trennstab eine abgewinkelte Oberfläche aufweist, um das von der mindestens einen Lichtquelle emittierte Licht aus der Ebene der Platte und durch mindestens eines der Glassubstrate abzulenken.

6. Beleuchtungsplatte nach einem vorhergehenden Anspruch, wobei die mindestens eine Lichtquelle eine Lichtquelle umfasst, die auf einem Rahmen (80) an einem Rand eines oder beider Glassubstrate so angebracht ist, dass sie der Kunststoffzwischenschicht zugewandt ist.

7. Beleuchtungsplatte nach einem vorhergehenden Anspruch, wobei die mindestens eine Lichtquelle eine seitlich emittierende Quelle (92) umfasst, die auf einer Innenfläche eines der Glassubstrate angebracht ist.

8. Verfahren zur Herstellung einer Verbundglasbeleuchtungsplatte mit den Schritten des Laminierens eines ersten Glassubstrats und eines zweiten Glassubstrats mit einer Kunststoffzwischenschicht dazwischen,
und Bilden mindestens einer Lichtquelle, um Licht in die Platte entlang einer Ebene der Platte zu emittieren,
wobei mindestens ein Teil der Kunststoffzwischenschicht zum Ablenken des Lichts aus der Ebene der Platte und durch mindestens eines der Glassubstrate angeordnet ist, um eine gestreute Lichtausgabe bereitzustellen, wobei die Kunststoffzwischenschicht einen ersten Teil (21, 30), der mindestens teilweise lichtstreuend ist, und einen zweiten Teil (22), der transparent ist, aufweist und wobei die Beleuchtungsplatte eine Reflexionssperre (10) zur physischen Trennung zwischen dem ersten und zweiten Teil der Kunststoffzwischenschicht aufweist.

9. Verfahren nach Anspruch 8, wobei die Kunststoffzwischenschicht zumindest teilweise lichtstreuend ist, um eine Ablenkung des Lichts zu bewirken.

10. Schritt zum Bilden der mindestens einen Lichtquelle, umfassend das Bereitstellen einer seitlich emittierenden Lichtquelle auf einer Innenfläche eines der Glassubstrate vor dem Laminierungsschritt.

## Revendications

1. Panneau d'éclairage en verre stratifié, comprenant:
un premier substrat de verre (2) et un second substrat de verre (4), les premier et second substrats de verre étant stratifiés ensemble par l'entremise d'une couche intermédiaire de plastique (3, 21, 22, 30),
au moins une source de lumière (5, 92) agencée de manière à émettre de la lumière dans le panneau le long d'un plan du panneau,
dans lequel au moins partie de la couche intermédiaire de plastique est agencée de manière à dévider la lumière hors du plan et à travers au moins un des substrats de verre afin de produire une sortie de lumière diffuse,
dans lequel la couche intermédiaire de plastique comprend du polyvinyle butyral,
dans lequel la couche intermédiaire de plastique présente une première partie (21, 30) qui est au moins partiellement diffuseuse de lumière et une seconde partie (22) qui est transparente, et
dans lequel le panneau d'éclairage présente une barrière réfléchissante (10) pour établir une séparation physique entre les première et seconde parties de la couche intermédiaire de plastique.

2. Panneau d'éclairage selon la revendication 1, dans lequel ladite au moins une source de lumière (5, 92) est agencée de manière à émettre de la lumière dans la couche intermédiaire de plastique de façon prédominante le long d'un plan du panneau.

3. Panneau d'éclairage selon la revendication 1, dans lequel la couche intermédiaire de plastique est au moins partiellement diffuseuse de lumière de telle sorte que la lumière soit déviée.

4. Panneau d'éclairage selon la revendication 1, dans lequel la barrière comprend une tige de séparation.

5. Panneau d'éclairage selon la revendication 4, dans lequel la tige de séparation présente une surface oblique pour dévier la lumière émise par ladite au moins une source de lumière hors du plan du panneau et à travers au moins un des substrats de verre.

6. Panneau d'éclairage selon l'une quelconque des revendications précédentes, dans lequel ladite au moins une source de lumière comprend une source de lumière montée sur un cadre (80) au niveau d'un bord de l'un ou de chacun des deux substrats de verre de manière à faire face à la couche intermédiaire de plastique.

7. Panneau d'éclairage selon l'une quelconque des revendications précédentes, dans lequel ladite au moins une source de lumière comprend une source à émission latérale (92) montée sur une surface intérieure de l'un des substrats de verre.

8. Procédé de fabrication d'un panneau d'éclairage en verre stratifié, comprenant les étapes suivantes:
stratifier un premier substrat de verre et un second substrat de verre, avec une couche intermédiaire de plastique entre ceux-ci, et
former au moins une source de lumière afin d'émettre de la lumière dans le panneau le long d'un plan du panneau,
dans lequel au moins partie de la couche intermédiaire de plastique est agencée de manière à dévier la lumière hors du plan du panneau et à travers au moins l'un des substrats de verre afin de produire une sortie de lumière diffuse,
dans lequel la couche intermédiaire de plastique présente une première partie (21, 30) qui est au moins partiellement diffuseuse de lumière et une seconde partie (22) qui est transparente, et
dans lequel le panneau d'éclairage présente une barrière réfléchissante (10) pour établir une séparation physique entre les première et seconde parties de la couche intermédiaire de plastique.

9. Procédé selon la revendication 8, dans lequel la couche intermédiaire de plastique est au moins partiellement diffuseuse de lumière de telle sorte que la lumière soit déviée.

10. Etape de formation de ladite au moins une source de lumière qui implique la présence d'une source de lumière à émission latérale sur une surface intérieure de l'un des substrats de verre avant l'étape de stratification.
